# EUROPEAN PATENT APPLICATION

(11) **EP 4 592 140 A1**
(43) Date of publication of application: **30.07.2025**
(21) Application number: 25153344.4
(22) Date of filing: 22.01.2025
(51) Int. Cl.: B60Q 1/26, B62J 6/045, B62J 6/055

(54) **REAR LIGHTING UNIT FOR STRADDLE-TYPE MOTOR VEHICLES**

(30) Priority: 23.01.2024 IT 202400001182
(71) Applicant: Piaggio & C. S.P.A., 56025 Pontedera Pisa (IT)
(72) Inventor: SOATTI, Piero, 56025 Pontedera (IT); PERON, Stivi, 56025 Pontedera (IT)
(74) Representative: Savi, Massimiliano

(57) **Abstract**

A rear lighting assembly for a two- or three-wheeled vehicle comprising a pair of light-signaling devices connected to a protruding support connectible to the vehicle, such that said light-signaling devices protrude from the left and right sides of said protruding support, and in which the LEDs configured to signal a change in the direction of the vehicle have an average distance from the vertical centerline plane of the vehicle greater than the LEDs configured to signal the vehicle braking and/or to provide the rear position light of the vehicle.

## Description

### FIELD OF THE INVENTION

In general, the present invention relates to the sector of ridable saddle vehicles and, more in particular, it relates to the technical field of rear lights of rideable saddle vehicles.

### BACKGROUND ART

For some years, in the field of two-wheeled vehicles and motorcycles in particular, there has been a style trend which consists in moving the saddle further forward and shortening the "tail" of the motorcycle.

However, these stylistic and design changes can cause technical problems. In the case of rear light assemblies connected to the motorcycle, a drawback lies in the excessive sinking of the taillight in the side bags, which can limit the side visibility of the taillight itself. Given that the visibility angle of the rear light is guaranteed by law and must be at least 80° on each side, a light which is partially hidden by the side bags, when present, may no longer comply with legal requirements.

Furthermore, the rear light is made in a different shape and size for each different model of motorcycle, so as also to suit the lines of the motorcycle and possibly solve any visibility problems, such as those mentioned above. This requires considerable investment for the molds that must, with each new model, be modified or entirely new.

To solve these technical problems and others related thereto, steps should be taken to make the rear lights and rear turn signals of the motorcycle independent and separate from the rest of the motorcycle itself.

In particular, the need is felt to overcome the drawback whereby the light emitted by the respective sources reciprocally interferes, resulting in poor identification by a user following the motorcycle.

Therefore, it is the object of the present description to provide a rear lighting assembly for two-wheeled vehicles which can solve the technical problems present in the prior art.

It is another object of the present invention to provide a rear lighting assembly for two-wheeled vehicles which makes the rear lights and rear turn signals of the motorcycle independent and separate from the rest of the motorcycle itself.

It is a further object of the present invention to make available a two- or three-wheeled rideable saddle vehicle provided with a rear lighting assembly which makes the rear lights and rear turn signals of the motorcycle independent and separate from the rest of the motorcycle itself.

### BRIEF DESCRIPTION OF THE INVENTION

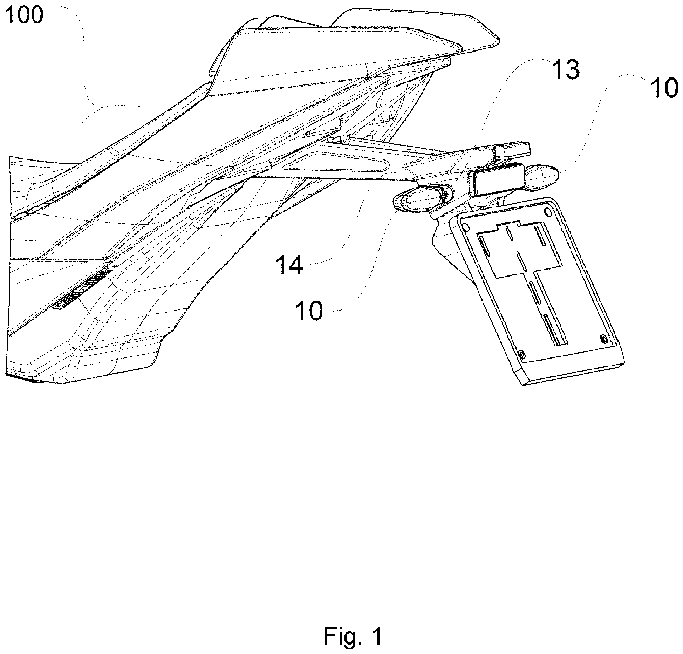

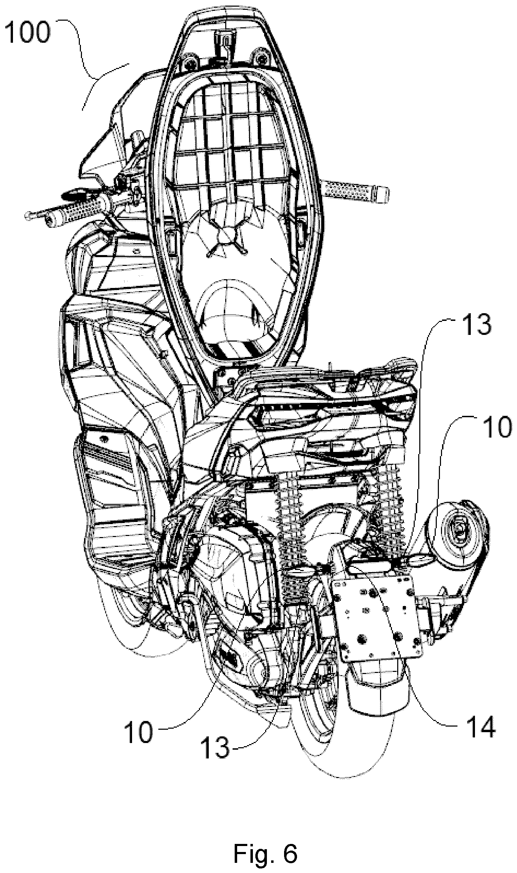

In a first embodiment, the rear lighting assembly for two- or three-wheeled rideable saddle vehicles according to the present description achieves its purpose by means of the use of a pair of light-signaling devices connected to a protruding support which can be coupled to the vehicle. In general, said protruding support can be connected to one of the sprung masses of the motorcycle, such as the tail, as shown in accompanying Fig. 1, or to one of the unsprung masses of the motorcycle, such as the rear swingarm or rear fender support, as shown in accompanying Fig. 6. In the latter version, the rear lighting assembly is less affected by the pitching of the motorcycle and allows more freedom for making the tail.

Each of said light-signaling devices preferably comprises a tapered shape body which allows said light-signaling devices to protrude in a cantilevered manner from said protruding support couplable to the vehicle, one on the left side and the other on the right side at a mutual distance of at least 180 mm.

Furthermore, said light-signaling devices may be connected to said protruding support by means of a flexible element capable of absorbing possible shocks.

The structure of the rear lighting assembly for two-wheeled vehicles according to the present description makes it possible, among other things, to keep the turn signals and rear lights separate from the body of the motorcycle, thus making available an area of the motorcycle that can be used, for example, to position a rear radar in a very effective position for detecting possible hazards present behind the rider, thus improving the overall safety of the motorcycle.

The structure of the aforesaid light-signaling devices involves an opaque container, preferably made of plastic material, provided with a transparent or translucent cover which may comprise zones of different colors. These devices contain and integrate both turn signals and brake and position lights, which are made by means of LEDs that can be, for example, mounted on an appropriate baseplate housed on the bottom of the aforesaid container. The LEDs which form the turn signals are mounted on the aforesaid baseplate so as to occupy a generally more outer position than the LEDs forming the stop lights and the position indicators. Considering the centerline plane of the vehicle, the average distance from the aforesaid centerline plane of the vehicle of the LEDs configured to signal a change of direction is greater than the average distance from the aforesaid centerline plane of the vehicle of the LEDs configured to signal the braking of the vehicle and/or to provide the rear position light of the vehicle.

In an embodiment, the LEDs of the aforesaid light signaling devices are arranged, on the aforesaid baseplate, so that the LEDs configured to signal a change of direction are three LEDs arranged at the vertices of a triangle, while the LEDs configured to signal braking and/or to provide the rear position light are three LEDs and are arranged aligned. In this manner, the arrangement of the LEDs configured to signal a change of direction at the vertices of a triangle make it possible to obtain a homogeneous intermittent light at the end of the corresponding signaling devices. Additionally, the arrangement of the LEDs configured to signal the braking and/or to provide the rear position light arranged mutually aligned also makes it possible to obtain an evenly distributed light over the entire length of the stretch corresponding to the rear position light and brake light. Again, such a combined arrangement of LEDs for the change of direction and rear position/brake light makes it possible to obtain respective light beams that, when active, do not interfere with each other, ensuring that each emitted light is visibly distinct and reciprocally defined. This aspect solves the drawbacks according to the prior art, in which the light emitted by the respective sources is indistinguishable in the cases in which both light sources are active, e.g., when both the brake light and the turn signal light are active at the same time.

Advantageously, the aligned arrangement of LEDs configured to signal braking and/or to provide rear position light forms with the LEDs configured to signal a change of direction arranged at the vertices of a triangle, an arrow-like conformation.

In detail, the linear branch of the aligned LEDs is arranged centered relative to the base of the triangle defined by the LEDs indicating the direction. In other words, the linear stretch of the LEDs configured to signal the braking and/or to provide the rear position light is placed between the two LEDs that define the base of the triangle. Therefore, the aligned LEDs fall in a zone where the LEDs configured to signal a change of direction are not present on the same axis at close range. This makes it possible to reduce the light interference of the two light sources when they are active at the same time, while generating a defined and homogeneous light in each respective area of the signaling device.

In another embodiment, the LEDs of the aforementioned light-signaling devices configured to signal a change in direction of the vehicle have an average distance from the vertical centerline plane of the vehicle that is greater than the LEDs configured to provide the rear position light of the vehicle, and the LEDs configured to provide the rear position light of the vehicle have a greater average distance from the vertical centerline plane of the vehicle than the LEDs configured to signal vehicle braking.

The LEDs related to different functions can be separated by opaque septa, e.g. also mounted on the aforementioned baseplate so that they are positioned orthogonally to the plane of the baseplate, adapted to keep distinct and separate the light beams emitted by the LED assemblies, e.g., those deputed to indicate the change of direction and those deputed to indicate the position or the braking of the vehicle. Furthermore, advantageously the emissions of said LEDs can be appropriately directed and optimized by means of the use of special lenses arranged in front of said LEDs and adapted to appropriately focus the aforesaid emissions.

Finally, said translucent or transparent cover may comprise a first orange-colored portion arranged at the LEDs configured to signal a change in the direction of the vehicle and a second red-colored portion arranged at the LEDs configured to signal the braking of the vehicle and/or to provide the rear position light of the vehicle.

### BRIEF DESCRIPTION OF THE FIGURES

Further features and advantages of the invention will become apparent from reading the following detailed description, given by way of a non-limiting example, with the aid of the figures shown in the accompanying drawings, in which:
Fig. 1 illustrates a view of an embodiment of the rear lighting assembly according to the present description, installed on the rear part of a two- or three-wheeled rideable saddle vehicle;
Fig. 2 illustrates the plan, elevation, and axonometric views of an embodiment of the light-signaling devices of the rear lighting assembly for a two- or three-wheeled rideable saddle vehicle according to the present description;
Fig. 3 illustrates plan views of an embodiment of the light-signaling device of the lighting assembly according to the present description, in different operating modes;
Fig. 4 illustrates plan views of an embodiment of the light-signaling device of the lighting assembly according to the present description, either assembled or open to highlight the internal parts;
Fig. 5 illustrates an exploded axonometric view of an embodiment of the light-signaling device of the rear lighting assembly according to the present description, and
Fig. 6 illustrates a two-wheeled rideable saddle vehicle with an embodiment of the rear lighting assembly according to the present description, installed on the fender.

The following description of exemplary embodiments relates to the accompanying drawings. The same reference numbers in the various drawings identify the same elements or similar elements. The following detailed description does not limit the invention. The scope of the invention is defined by the appended claims.

### DETAILED DESCRIPTION OF THE INVENTION

With reference to the accompanying Fig. 1, the rear lighting assembly for a two- or three-wheeled rideable saddle vehicle 100 according to the present description comprises a pair of light-signaling devices 10 connected in a cantilevered manner on either side of a protruding support 14 couplable to the vehicle 100. Said protruding support is integral to the rear part of the vehicle frame and can be used to support the license plate bezel of the vehicle 100. Advantageously, the protruding bracket 14 can be configured to protrude rearwards so that, if the vehicle 100 uses rear side bags, the rear lighting assembly protrudes beyond said side bags so as to guarantee an angle of side visibility of at least 80° on each side. In general, said protruding support can be connected to one of the sprung masses of the motorcycle 100, such as the tail, as shown in accompanying Fig. 1, or to one of the unsprung masses of the motorcycle 100, such as the rear swingarm or rear fender support as shown in accompanying Fig. 6. In the latter version, the rear lighting assembly is less affected by the pitching of the motorcycle 100 and allows more freedom for making the tail.

To make said light-signaling devices 10 more resistant to possible shocks, their connecting portion to the protruding support 14 may advantageously comprise a flexible element 13 capable of allowing a certain angle of displacement relative to the equilibrium position to the light-signaling devices 10 when stressed by a shock.

The light-signaling devices 10 are placed at the same elevation than to the protruding support 14 and are arranged so that they are mutually distanced by at least 180 mm. In particular, said light-signaling devices 10 are distanced at least 90 mm from the vertical centerline plane of the vehicle 100.

In a preferred embodiment, the aforesaid light-signaling devices comprise an opaque container 11 provided with a translucent or transparent cover 12. The container 11 is adapted to contain the LEDs 16 deputed to signal position, braking and change in the direction of the vehicle 100. Said LEDs 16 are preferably mounted on a special baseplate 17 adapted to be housed in the container so that the light emission of the LEDs faces towards the cover 12. The baseplate is connected to the electrical system of the vehicle 100 by means of an appropriate wiring harness 20 so as to guarantee that the LEDs are provided with the appropriate control signals and power supply.

The LEDs are arranged inside the container 11 so that the LEDs configured to signal a change in the direction of the vehicle 100 have an average distance from the vertical centerline plane of the vehicle 100 greater than the LEDs configured to signal the braking of the vehicle 100 and/or to provide the rear position light of the vehicle 100. In this manner, the orange-colored light related to the turn signal is emitted from the end of the devices 10 with greatest distance from the vertical centerline plane of the vehicle 100. In an embodiment, the LEDs 16 of the aforesaid light signaling devices 10 are arranged, on the aforesaid baseplate 17, so that the LEDs configured to signal a change of direction 16" are three LEDs arranged at the vertices of a triangle, while the LEDs configured to signal braking and/or to provide the rear position light 16' are three and aligned.

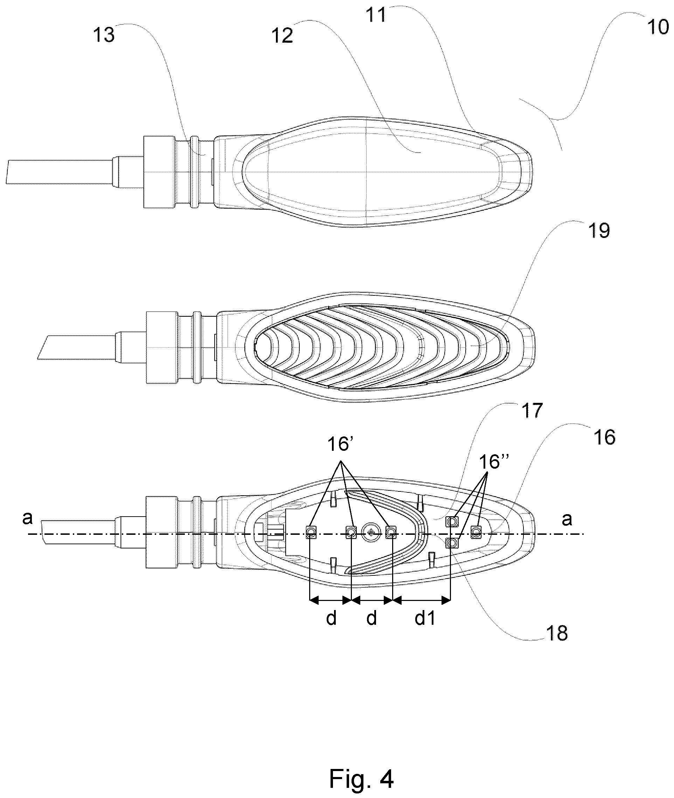

As a whole, as shown in figure 4, the arrangement of the LEDs 16" configured to signal a change of direction and the LEDs 16' configured to signal braking and/or to provide the position light form an arrow-like configuration. This makes it possible to obtain respective light beams which, when active, do not interfere with each other, ensuring that each emitted light is distinct and not reciprocally interfering.

Advantageously, the LEDs 16' are aligned relative to an axis a-a and are mutually distanced by a distance d. In particular, they are equally distanced.

The LEDs 16", on the other hand, are placed at the vertices of a triangle, in particular an isosceles triangle, and therefore they are also mutually equidistant.

In detail, the linear branch of the aligned LEDs 16' is arranged centered with respect to the base of the triangle defined by the LEDs 16".

In particular, the end LED of the LED assembly 16' is distanced with respect to the pair of 16" LEDs that define the base of the triangle by a distance d1. The distance d1 is greater than the distance d. Therefore, the aligned LEDs 16' are appropriately distanced from the LEDs 16'. In particular, the LEDs 16' fall into a zone in which the LEDs 16" that signal a change of direction are not present on the same axis a-a at close range. This makes it possible to reduce the light interference of the two light sources when they are active at the same time, while generating a defined and homogeneous light in each respective area of the signaling device.

Alternatively, the LEDs configured to signal a change in the direction of the vehicle 100 may have a distance from the vertical centerline plane of the vehicle 100 greater than the LEDs configured to provide the rear position light of the vehicle 100, and the latter have, in turn, a distance from the vertical centerline plane of the vehicle 100 greater than the LEDs configured to signal the braking of the vehicle 100.

According to most international regulations, the rear lighting assemblies of vehicles must emit red-color light to signal braking and position, and orange-color light to signal change of direction. Different color light emissions can be achieved by acting directly on the LEDs or on the cover of the device or both.

Therefore, LEDs that emit red-colored light and LEDs that emit orange-colored light can be used by arranging them inside the container 11 as described above. The cover 12 of the device may be chosen colorless or provided with a first orange-colored portion arranged at said LEDs configured to signal a change in the direction of the vehicle 100 and a second red-colored portion arranged at said LEDs configured to signal the braking of the vehicle 100 and/or to provide the rear position light of the vehicle 100.

To separate the light emissions of the LED assembly deputed to signal the change of direction from the LED assembly deputed to signal braking and position, advantageously at least one opaque separating septum 18, arranged inside the container 11, facing, in a substantially orthogonal manner, the plane of the bottom of the container 11 of the device 10 and such to be interposed between the different LED assemblies, can be employed. In an embodiment, said at least one separating septum 18 may be placed on said LED mounting baseplate, so as to be positioned orthogonally to the plane of said baseplate.

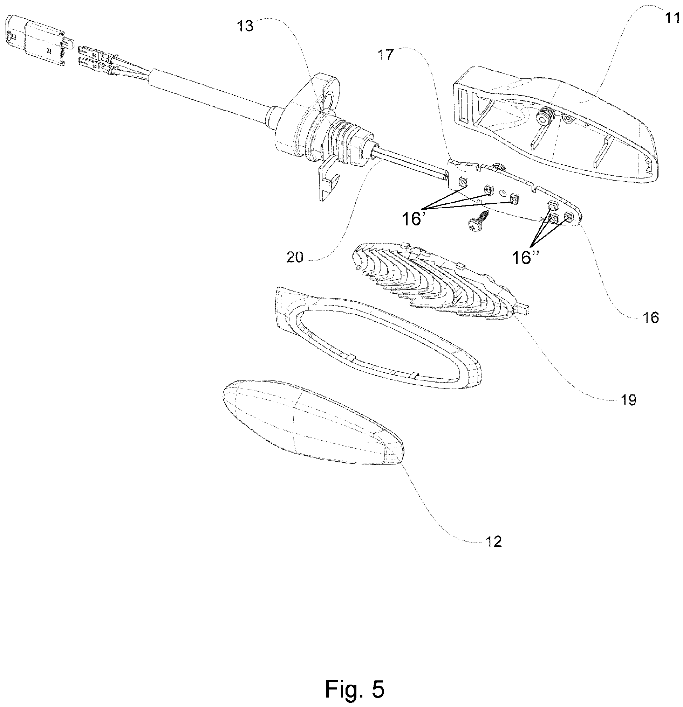

Furthermore, advantageously, the emissions of said LEDs can be appropriately directed and optimized using appropriate lenses adapted to focus the aforesaid emissions appropriately. With reference to accompanying Fig. 4 and 5, in an embodiment, said light-signaling devices 10 comprise at least one lens and preferably an assembly of lenses 19 made on a same translucent substrate adapted to be placed in front of the baseplate 17 comprising the LEDs 16. The lenses subject the light beams emitted by the LED 16 to refraction so as to direct them appropriately to maximize their visibility by motorcyclists and motorists following the motorcycle 100.

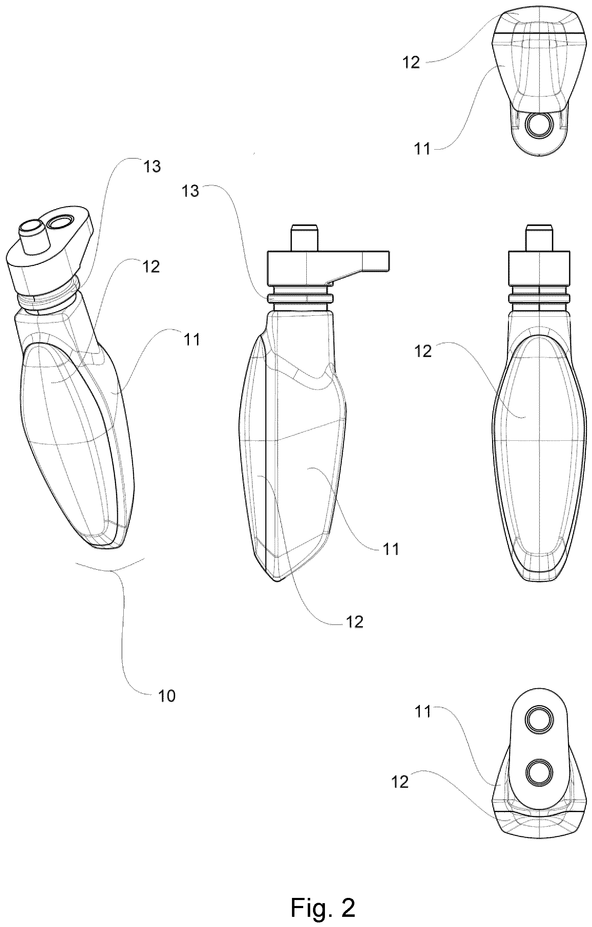

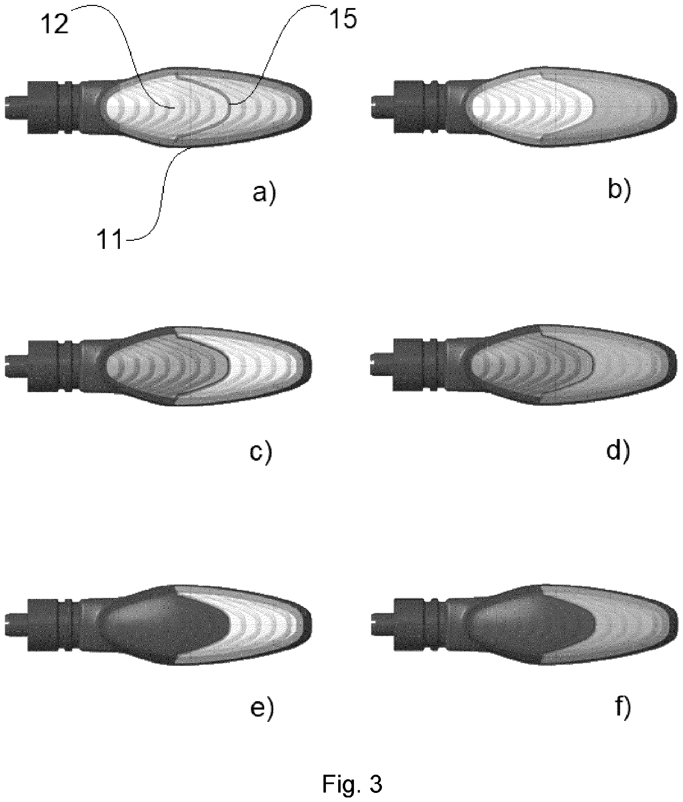

With reference to accompanying Fig. 2, 3, 4 and 5, embodiment examples of the optical assembly according to the present description involve that the light-signaling devices 10 comprise a container 11 provided with a colorless cover 12 and a separating septum 15 adapted to divide the assembly of orange-color emitting **LEDs** from the red-color emitting LEDs. **In** the example shown in Fig. 3, image a) shows the device switched off; image b) shows the device with the **LEDs** indicating change of direction on; image c) shows the device with the position signal **LEDs** on; image d) shows the device with the position signal **LEDs** and the **LEDs** indicating change of direction switched on; image (e) shows the device with the braking signal **LEDs** switched on, and image f) shows the device with the braking signal **LEDs** and the **LEDs** indicating change of direction switched on.

**If** the same **LEDs** are used to emit red light to signal position and braking, said **LEDs** will have at least two different emission intensity levels of which the lowest level will be used to signal position and the highest level will be used to signal braking.

## Claims

1. A rear lighting assembly for a two- or three-wheeled vehicle comprising a pair of light-signaling devices (10) connected to a protruding support couplable to the vehicle, said light-signaling devices (10) being arranged cantilevered on the right and left sides of said protruding support and being mutually distanced by at least 180 mm, each of said light-signaling devices (10) comprising an opaque container (11) provided with a translucent or transparent cover (12), a plurality of **LEDs** (16) arranged inside said container (11) so that the light emission of said **LEDs** (16) crosses said cover (12), wherein the average distance from the vehicle vertical centerline plane of the **LEDs** (16) configured to signal a change in the direction of the vehicle is greater than the average distance from the vehicle vertical centerline plane of the LEDs (16) configured to signal the braking of the vehicle and/or to provide the rear position light of the vehicle, wherein, inside each light-signaling device, said LEDs (16) are mounted on an appropriate baseplate (17) housed on the bottom of said container (11), and wherein the LEDs (16) are arranged, on said baseplate (17), so that the LEDs (16") configured to signal a change of direction are three LEDs arranged at the vertices of a triangle, while the LEDs (16') configured to signal braking and/or to provide the rear position light are three LEDs aligned.

2. A rear lighting assembly according to the preceding claim, wherein said translucent or transparent cover (12) comprises a first orange-colored portion arranged at said LEDs (16) configured to signal a change in the direction of the vehicle and a second red-colored portion arranged at said LEDs configured to signal the braking of the vehicle and/or to provide the rear position light of the vehicle.

3. A rear lighting assembly according to one or more of the preceding claims, wherein the LEDs (16') are aligned relative to an axis (a-a) and mutually distanced by a distance (d), and wherein the end LED of the LED assembly (16') proximal to the LED assembly (16") is distanced from the LEDs (16") defining the base of the triangle by a distance (d1), wherein the distance (d1) is greater than the distance (d).

4. A rear lighting assembly according to one or more of the preceding claims, wherein said light-signaling devices (10) comprise at least one lens adapted to be positioned in front of the baseplate (17) comprising the LEDs (16).

5. A rear lighting assembly according to the preceding claim, wherein said at least one lens comprises an assembly of lenses (19) made on a same translucent substrate adapted to be placed in front of the baseplate (17) comprising the LEDs (16).

6. A rear lighting assembly according to one or more of the preceding claims, wherein the average distance from the vehicle vertical centerline plane of the LEDs (16) configured to signal a change in the direction of the vehicle is greater than the average distance from the vehicle vertical centerline plane of the LEDs (16) configured to provide the rear position light of the vehicle, and the average distance from the vehicle vertical centerline plane of the LEDs (16) configured to provide the rear position light of the vehicle is greater than the average distance from the vehicle vertical centerline plane of the LEDs (16) configured to signal the braking of the vehicle.

7. A rear lighting assembly according to one or more of the preceding claims, wherein said light devices are connected to the protruding support by means of flexible connecting means (13).

8. A rear lighting assembly according to one or more of the preceding claims, wherein the LEDs (16") configured to signal a change in the direction of the vehicle are separated from the LEDs (16') configured to signal vehicle braking and/or to provide vehicle rear position light, by means of at least one opaque separating septum (18) configured to separate the respective light fluxes.

9. A rear lighting assembly according to the preceding claim, wherein said at least one opaque separating septum (18) is mounted on said baseplate (17) so as to be positioned orthogonally to the plane of the baseplate (17).

10. A ridable saddle vehicle (100) comprising a rear lighting assembly according to one or more of claims 1 to 9.

11. A ridable saddle vehicle (100) according to the preceding claim, wherein the lighting assembly is the only rear lighting system adapted to signal changes in direction, braking, and providing vehicle (100) position light.

12. A ridable saddle vehicle (100) according to one or more of claims 11 to 12, wherein the protruding support (14) is a support configured to support the license plate of the vehicle (100) and/or a rear wheel fender of the vehicle (100).

13. A ridable saddle vehicle (100) according to the preceding claim, comprising removable side bags and wherein the protruding support (14) is configured to extend from the rear so that said lighting assembly protrudes beyond said side bags so as to ensure an angle of side visibility equal to at least 80° on each side.

14. A ridable saddle vehicle (100) according to claim 13, wherein the protruding support (14) is connected to the unsprung masses of the vehicle (100).
